# EUROPEAN PATENT SPECIFICATION

(11) **EP 4 001 010 B1**
(45) Date of publication and mention of the grant of the patent: **08.04.2026**
(21) Application number: 21208348.9
(22) Date of filing: 15.11.2021
(51) Int. Cl.: B60Q 1/26, B60Q 1/50

(54) **METHOD FOR THE COMMUNICATION BETWEEN A VEHICLE AND A HUMAN ROAD USER**
VERFAHREN ZUR KOMMUNIKATION ZWISCHEN EINEM FAHRZEUG UND EINEM MENSCHLICHEN VERKEHRSTEILNEHMER
PROCÉDÉ DE COMMUNICATION ENTRE UN VÉHICULE ET UN USAGER DE LA ROUTE HUMAIN

(30) Priority: 16.11.2020 US 202063198845 P
(43) Date of publication of application: 25.05.2022
(73) Proprietor: Autobrains Technologies LTD., 6618502 Tel Aviv (IL)
(72) Inventor: Raichelgauz, Igal, Tel Aviv (IL); Odinaev, Karina, Tel Aviv (IL)
(74) Representative: Kraus & Lederer PartGmbB

(56) References cited:
- EP-A1- 2 993 083
- EP-A1- 3 536 554
- US-A1- 2015 336 502
- US-A1- 2016 167 648
- US-A1- 2017 240 098
- RASOULI AMIR ET AL: "Autonomous Vehicles That Interact With Pedestrians: A Survey of Theory and Practice", IEEE TRANSACTIONS ON INTELLIGENT TRANSPORTATION SYSTEMS, IEEE, PISCATAWAY, NJ, USA, vol. 21, no. 3, 15 March 2019 (2019-03-15), pages 900 - 918, XP011775461, ISSN: 1524-9050, [retrieved on 20200228], DOI: 10.1109/TITS.2019.2901817

## Description

### BACKGROUND

Autonomous vehicle and vehicle equipped with advanced driver assistance systems (ADAS) are expected to gradually replace older vehicles that are driven by human drivers - and do not include ADAS or autonomous vehicle systems.

The human drivers of such older vehicles communicate with other human road users (such as other drivers, pedestrians, and the like) without using electronic devices. This so-called human communication increases the safety of the human driver and the other human road users.
US patent application 2016/167648 **illustrates arrangements that relate to the interaction between an autonomous vehicle and an external environment of the autonomous vehicle. Such interaction can occur in various ways. For example, a non-verbal human gesture in the external environment can be detected. The non-verbal human gesture can be identified. A future driving maneuver can be determined based on the identified non-verbal human gesture. The autonomous vehicle can be caused to implement the determined future driving maneuver. As another example, the external environment of the autonomous vehicle can be detected to identify a person (e.g. a human pedestrian, a human bicyclist, a human driver or occupant of another vehicle, etc.) therein. The identified person can be located. It can be determined whether the person is potentially related to a future driving maneuver of the autonomous vehicle. The autonomous vehicle can be caused to send a directional message to the person.**
US patent application 2017/240098 **illustrates a control system of a self-driving vehicle (SDV) that can process sensor data from a sensor system of the SDV to autonomously control acceleration, steering, and braking systems of the SDV along a current route. Based on the current route, the control system can dynamically determine a set of immediate actions to be performed by the SDV. Based on the set of immediate actions, the control system can generate a set of intention outputs on a lighting strip of the SDV, the set of intention outputs indicating the set of immediate actions prior to the SDV executing the set of immediate actions.**

Other methods for communication between a vehicle and a human road user are known from EP 3 536 554 A1 or XP011775461.

There is a growing need to allow Autonomous vehicles and vehicles equipped with ADAS to participate in such human communication. This object is satisfied by a method for communication between a vehicle and a human road user comprising the features of claim 1.

### BRIEF DESCRIPTION OF THE DRAWINGS

The invention will be understood and appreciated more fully from the following detailed description, taken in conjunction with the drawings in which:
FIG. 1 is an example of a method;
FIG. 2 is an example of a method;
FIG. 3 is an example of a method;
FIG. 4 illustrates a first scenario that does not form part of the invention and includes attempts of human road users to communicate with a driver;
FIG. 5 is an example of different man machine interfaces;
FIGs. 6-11 illustrate multiple transfers of information between a driver and a human road user. FIG. 11 illustrates a scenario that does not form part of the invention.

### DESCRIPTION OF EXAMPLE EMBODIMENTS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the appended claims. The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a device or computerized system capable of executing the method and/or to a non-transitory computer readable medium that stores instructions for executing the method.

Any reference in the specification to a computerized system or device should be applied mutatis mutandis to a method that may be executed by the computerized system, and/or may be applied mutatis mutandis to non-transitory computer readable medium that stores instructions executable by the computerized system.

Any reference in the specification to a non-transitory computer readable medium should be applied mutatis mutandis to a device or computerized system capable of executing instructions stored in the non-transitory computer readable medium and/or may be applied mutatis mutandis to a method for executing the instructions.

Any combination of any module or unit listed in any of the figures, any part of the specification and/or any claims may be provided.

The specification and/or drawings may refer to an image. An image is an example of a media unit. Any reference to an image may be applied mutatis mutandis to a media unit. A media unit may be an example of sensed information unit. Any reference to a media unit may be applied mutatis mutandis to sensed information. The sensed information may be sensed by any type of sensors- such as a visual light camera, or a sensor that may sense infrared, radar imagery, ultrasound, electro-optics, radiography, LIDAR (light detection and ranging), etc.

The specification and/or drawings may refer to a processor. The processor may be a processing circuitry. The processing circuitry may be implemented as a central processing unit (CPU), and/or one or more other integrated circuits such as application-specific integrated circuits (ASICs), field programmable gate arrays (FPGAs), full-custom integrated circuits, etc., or a combination of such integrated circuits.

Any combination of any steps of any method illustrated in the specification and/or drawings may be provided.

Any combination of any subject matter of any of claims may be provided.

Any combinations of computerized systems, units, components, processors, sensors, illustrated in the specification and/or drawings may be provided.

Any reference to any of the term "comprising" may be applied mutatis mutandis to the terms "consisting" and "consisting essentially of".

Any reference to any of the term "consisting" may be applied mutatis mutandis to the terms "comprising" and "consisting essentially of".

Any reference to any of the term "consisting essentially of" may be applied mutatis mutandis to the terms "comprising" and "comprising".

A human road user may communicate with a driver of a vehicle or with a vehicle - or to a person or device located at the driver's seat. The term driver may refer to a man seated in the driver seat - even if that person does not actually drive the vehicle. A human road user may communicate with a vehicle by transferring information to a sensor of an autonomous vehicle - for example direct his gestures towards (or within) a field of view of an image sensor of the vehicle. The vehicle may respond by generating a human perceivable response. Any reference to a communication of a human road user with a driver may be applied mutatis mutandis to a communication of a human road user with the vehicle.

The phrase "at least a partially autonomous module" means an ADAS module or an autonomous driving module.

The term "human communication" involves exchange of information by a human or by using a computerized device that mimics or otherwise represents an exchange of information by a human.

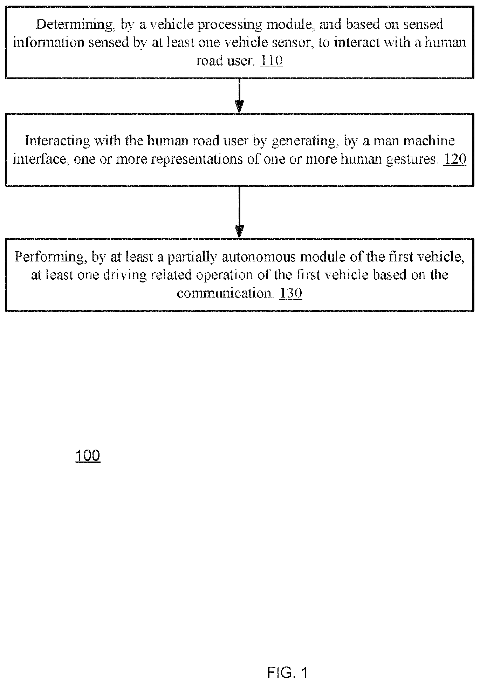

Figure 1 illustrates a method 100 for communication between a vehicle and a human road user.

Method 100 may start by step 110 of determining, by a vehicle processing module, and based on sensed information sensed by at least one vehicle sensor, to interact with a human road user.

The determining may include detecting an attempt of a human road user to communicate with a driver or the vehicle. The communication may be verbal or non-verbal. The attempt may involve an attempt to transfer information from the human road user to the vehicle.

The determining includes, according to the invention, detecting a situation in which human communication is expected or is mandated.

The detection of such situation is based on training a machine learning process to detect this situation.

Non-limiting examples of situations that may be expected to involve human communication are reaching a zebra crossing, approaching a kindergarten, reaching a traffic light, reaching a junction, reaching a school, reaching a densely populated area, and the like.

Step 110 may include processing the sensed information to detect one or more human road users and then attempt to detect a gesture that matches a known gesture that may be aimed to the driver or the vehicle.

Step 110 may be executed by a machine learning process. The machine learning process may be executed by one or more neural network processors, by any other implementation of one or more neural networks.

A machine learning process may be trained by media units such as videos of human road users that communicate with vehicles and/or drivers.

The media units may also capture the driver's communication - verbal or non-verbal. Such media units may be captured by inner vehicle camera or by cameras located outside the vehicle.

The media units may be tagged as including such communication attempts. Alternatively - the media units may not be tagged in such a manner.

Alternatively - the machine learning process may be trained by a dataset of videos that captured situations that are expected to involve human interaction.

For example - a pedestrian that is about to cross the road (at a crossroad or another location) in front of a vehicle. The video that captures this situation may be tagged with pedestrian crossing a road.

Yet for another example - a driver than attempt s to change the lane of its vehicle to the current lane of the vehicle, a driver that bypasses 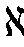 the vehicle, and the like. The video may be tagged with change lane or bypass, and the like.

The captured situations that are expected to involve human interaction may be detected by monitoring the manner in which a vehicle is driven - especially searching for stops, abrupt stops, abrupt changes of direction, and the like - especially cases in which a significant change in a driving is introduced and one or more human road user is involved.

Step 110 may be followed by step 120 of interacting with the human road user by generating, by a man machine interface, one or more representations of one or more human gestures.

The interacting may include one communication iterations. Each communication iteration may include detecting a communication attempt made by the human road user, responding to the communication attempt made by the user, and/or performing a communication attempt by a man machine interface - even when not responding to the human road user, and the like.

The man machine interface may communicate by generating audio and/or visual communication signals. The communication may include generating sounds, generating one or more images, performing a mechanical movement and the like.

The man machine interface (MMI) may include one or more displays, one of more loudspeakers or any other sound generators, one movable elements, a robot, a robotic arm, a robotic part of a human, a humanoid robot that models an entire human body, a humanoid robot that models only some parts of the human body, a non-humanoid robot, a robot positioned at the drivers seat, a robot located on top of the vehicle, a robot located on another seat of the vehicle, and the like.

A display may turn from transparent to non-transparent (or partially transparent) when communicating with the human road user.

An MMI or a part of the MMI may be installed within the vehicle, outside the vehicle, integrated with one or more windows or external surfaces of the vehicle, and the like.

The MMI may wirelessly communicate with a mobile device of the user so that the mobile device will present to the user communications made by the MMI - for example display videos of human gestures on a mobile phone, on virtual reality glasses, and the like.

The communication may mimic human verbal or non-verbal communication expected from a human driver.

The communication may include one or more human gestures such as directing a direction of gaze of an image of a driver towards the human road user, an approval gesture that approves a request from the user, a denial gesture that indicates to the human road user that a request of the user is not going to be fulfilled, a stop gesture asking the human road user to stop crossing the road or stop performing any other current action made by the human road user, a wain gesture asking the human road user to wait, a request gesture that requests the human road user to perform a certain action, a directional gesture that requests the human road user to propagate at a certain direction, a slow down gesture that requests the human road user to slow down, a speed up gesture that requests the human road user to speed up, a time related gestures that indicates a time period for completing an action by the human road user, and the like.

Step 120 may be followed by step 130 of performing, by at least a partially autonomous module of the first vehicle, at least one driving related operation of the first vehicle based on the communication.

The driving related operation may include stopping the vehicle, slowing the vehicle, driving the vehicle, changing a direction of movement of the vehicle, changing control over the vehicle (between human driver and vehicle module), changing a lane, speeding up, and the like.

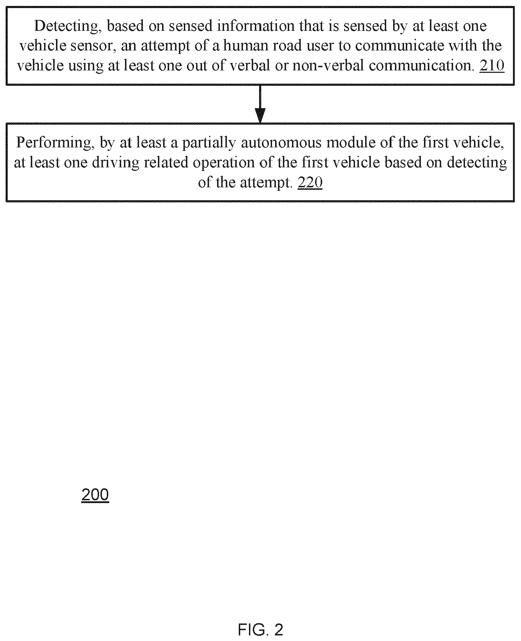

Figure 2 illustrates method 200 for incorporating human communication into driving related decisions.

Method 200 may start by step 210 of detecting, based on sensed information that is sensed by at least one vehicle sensor, an attempt of a human road user to communicate with the vehicle using at least one out of verbal or non-verbal communication. The attempt may involve transferring information from the human road user to the vehicle.

The attempt may be an attempt to communicate with the vehicle using non-verbal communication.

The attempt may include at least one human gesture made by a human road user.

The at least one human gesture may be a request made by the human road user from a driver of the first vehicle.

The at least one human gesture may be an indication of a future behavior of at least one road user within a vicinity of the first vehicle.

Step 210 may include determining that the at least one human gesture may be directed to the first vehicle. The can be deducted from the

Step 210 may include determining that the at least one human gesture may be directed to a driver of the first vehicle.

Step 210 may include determining that the at least one human gesture may be made by at least one of a hand, an arm, a head, a face, or a face element of the human road user.

The at least one gesture may be indicative of a future change of lane by a second vehicle that carries the human road user.

The at least one gesture may include pointing, by the human road user, to a future direction of movement of the second vehicle.

The at least one gesture may be a request to slow or stop the first vehicle.

The at least one gesture may be a request to verify that the first vehicle will stop before reaching the human road user.

The at least one gesture may include forming eye contact with a driver of the first vehicle.

The at least one gesture may be a request to enter a lane in which the first vehicle may be located.

Step 210 may be followed by step 220 of performing, by at least a partially autonomous module of the first vehicle, at least one driving related operation of the first vehicle based on detecting of the attempt.

Step 220 may be based on responses of previous drivers / previous vehicle to the detection of the attempts.

Step 220 may include autonomously driving the vehicle.

Step 220 may include performing an advanced driver assistance system (ADAS) operation.

Step 220 may include providing a human perceivable response gesture.

Step 220 may include multiple iterations of exchanging information with the human road user.

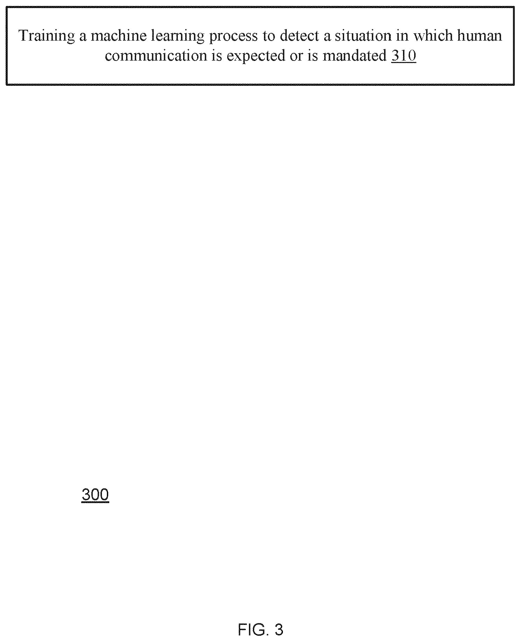

Figure 3 illustrates an example of a method 300 for training a machine learning process to detect a situation that involves human communication.

Method 300 may start by step 310 of training a machine learning process to detect a situation in which human communication is expected or is mandated.

Step 310 may also include training the machine learning process to interact with the human road user using verbal or non-verbal communication.

Step 310 may also include training the machine learning process to interact with the human road user using verbal or non-verbal communication.

Step 310 may also include training the machine learning process to perform at least one driving related operation of the first vehicle based on detecting of the attempt and/or an outcome of the communication with the human road user.

The training may include feeding a machine learning process with one or more datasets.

A dataset may include media units of situations that involved human interaction between a driver and a human road user. The interaction may include communications by only the driver, by only the human road user - or by both driver and human road user.

The dataset may also include media units indicative of driving related operations that follow the communication with the human road user.

The media units may represent at least one out of:
- An attempt of a human road user to communicate with the vehicle using verbal and non-verbal communication.
- An attempt of a human road user to communicate with the vehicle using non-verbal communication.
- An attempt of a human road user to communicate with the vehicle using verbal communication.
- At least one human gesture made by a human road user.
- At least one human gesture that is request made by the human road user from a driver of the first vehicle.
- At least one human gesture that is an indication of a future behavior of at least one road user within a vicinity of the first vehicle.
- At least one human gesture directed to a driver of a vehicle or toa driver of the vehicle.
- At least one human gesture made by at least one of a hand, an arm, a head, a face, or a face element of the human road user.
- At least one human gesture that is indicative of a future change of lane by a second vehicle that carries the human road user.
- Pointing, by the human road user, to a future direction of movement of the second vehicle.
- At least one human gesture that is a request to slow or stop the first vehicle.
- At least one human gesture a request to verify that the first vehicle will stop before reaching the human road user.
- At least one human gesture that includes forming eye contact with a driver of the first vehicle.
- At least one human gesture that is a request to enter a lane in which the first vehicle may be located.
- Captured situations that are expected to involve human interaction.
- A pedestrian that is about to cross the road (at a crossroad or another location) in front of a vehicle.
- A driver than attempt s to change the lane of its vehicle to the current lane of the vehicle.
- A driver that bypasses the vehicle.
- Situations that are expected to involve human interaction that are detected be detected by monitoring the manner in which a vehicle is driven - especially searching for stops, abrupt stops, abrupt changes of direction, and the like - especially cases in which a significant change in a driving is introduced and one or more human road user is involved.

The media units may be tagged, and the learning process may be unsupervised, weakly supervised or unsupervised.

A situation may be at least one of (a) a location of the vehicle, (b) one or more weather conditions, (c) one or more contextual parameters, (d) a road condition, (e) a traffic parameter.

The road condition may include the roughness of the road, the maintenance level of the road, presence of potholes or other related road obstacles, whether the road is slippery, covered with snow or other particles.

The traffic parameter and the one or more contextual parameters may include time (hour, day, period or year, certain hours at certain days, and the like), a traffic load, a distribution of vehicles on the road, the behavior of one or more vehicles (aggressive, calm, predictable, unpredictable, and the like), the presence of pedestrians near the road, the presence of pedestrians near the vehicle, the presence of pedestrians away from the vehicle, the behavior of the pedestrians (aggressive, calm, predictable, unpredictable, and the like), risk associated with driving within a vicinity of the vehicle, complexity associated with driving within of the vehicle, the presence (near the vehicle) of at least one out of a kindergarten, a school, a gathering of people, and the like.

A situation that involves human communication should also include at one out of (i) an attempt by the human road user to communicated with the driver and/or vehicle, (ii) a situation that requires communication, and the like.

Step 310 may include tuning the machine learning process to detect situation that may require human interaction with a human road user.

Step 310 may include tuning the machine learning process to (a) detect situation that may require human interaction with a human road user, and (b) to determine a response to the interaction.

The adequate response may include changing one or more driving parameter, interacting with the user, understanding the situation using the communicated messages from the human road user.

Either one of method 100, 200 and 300 may use one or more image sensors. The one or more sensors may include sensors aimed to cover one or more field of view at the side of the vehicle, as well as one or more fields of view to the front of the vehicle.

Method 300 may also use an image camera aimed to the driver of the vehicle - to captures the communication.

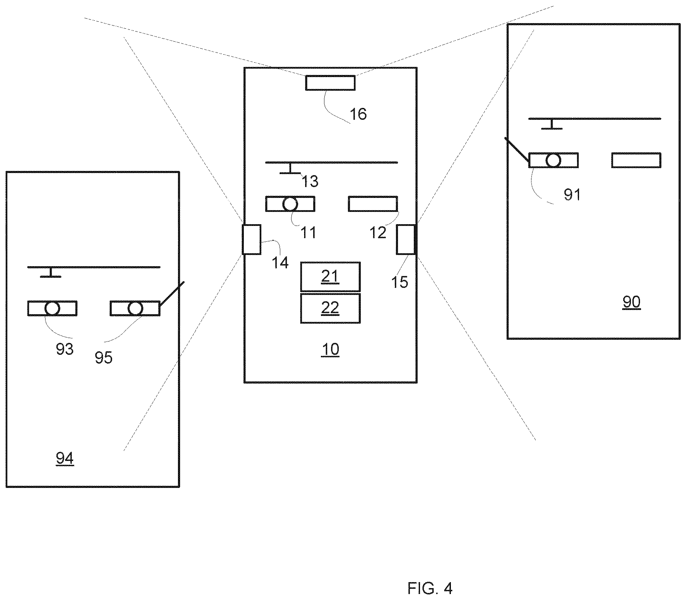

Figure 4 illustrates a vehicle 10 and two additional vehicles 90 and 94.

Vehicle 10 includes left image sensor 14, right image sensor 14, front image sensor 16, steering wheel 13, near driver seat 12, processing circuit 21, and at least partially autonomous driving module 22.

First additional vehicle 90 is positioned to the right of vehicle 10. A driver 91 of the first additional vehicle signals with his left hand his intention to enter the current lane of vehicle 10. This is a gesture that once captured by the right image sensor 15 and processed by the processing circuit 21, will make the processing circuit 21 aware of the intention of the driver 91. The processing circuit 21 may convey this information to the and at least partially autonomous driving module 22 that in turn may respond - for example by slowing vehicle 10.

Second additional vehicle 94 is positioned to the left of vehicle 10. A passenger 95 that sits to the right of driver 95 of the of the second additional vehicle signals with his right hand a request to enter the current lane of vehicle 10. This is a gesture that once captured by the left image sensor 14 and processed by the processing circuit 21, will make the processing circuit 21 aware of the intention of the driver 91. The processing circuit 21 may convey this information to the and at least partially autonomous driving module 22 that in turn may respond - for example by slowing vehicle 10 or by speeding up.

An MMI (not shown) of vehicle may interact with at least one of the driver 91 and passenger 95.

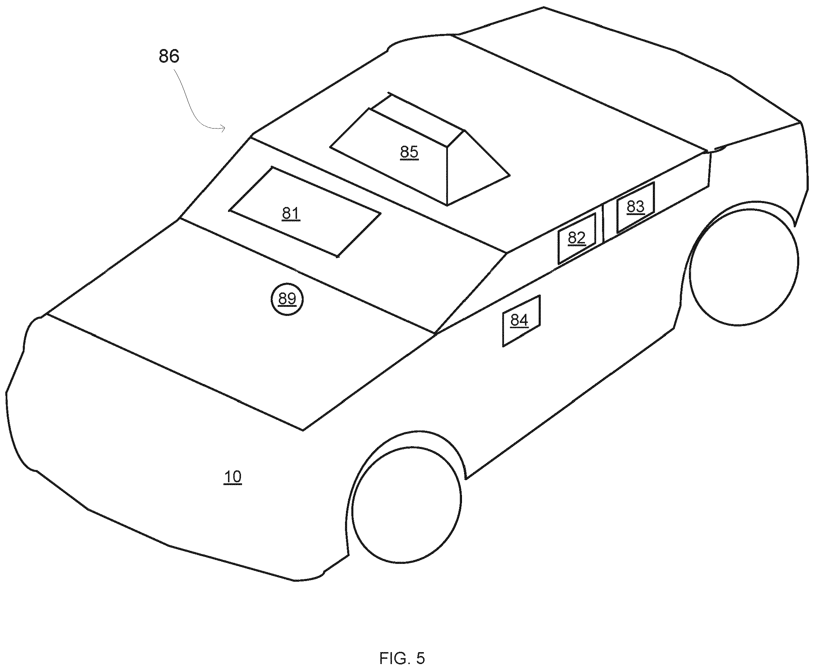

Figure 5 illustrates examples of various locations of a MMI such as a display. One or more displays may be located anywhere - on the roof (display 85), on front windows (displays 82 and 86), on a rear window (display 83), on the vehicle but not on the window- see door display 84. There may be any number and combinations of displays on the vehicle. On may also mean integrated with a vehicle part such as a window.

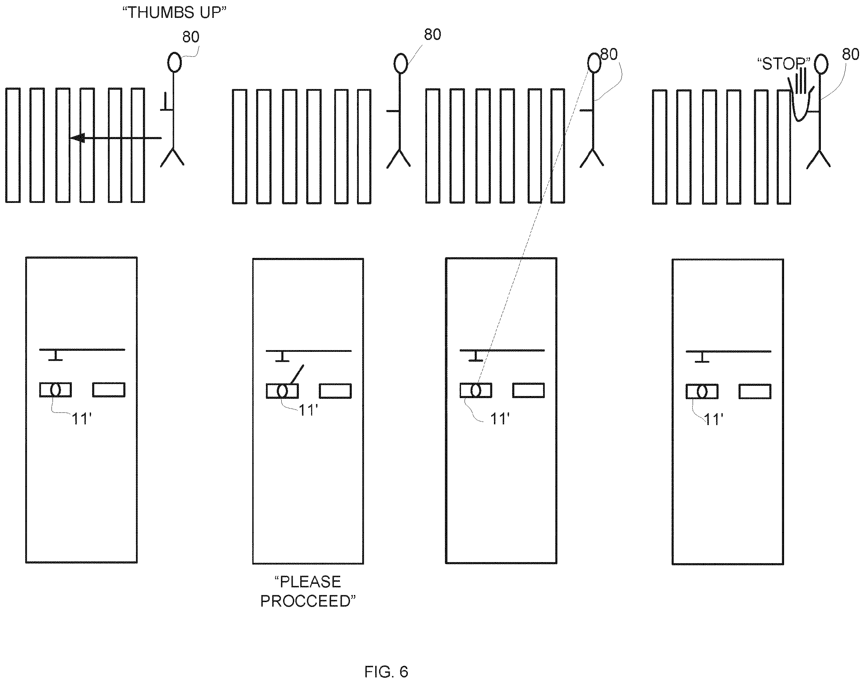

Figures 6-11 illustrate multiple transfers of information between a driver (or MMI) and a human road user.

Referring to figure 6 - from right to left:
- The human road user 80 reaches a cross road and requests (using a stop gesture) the driver (human driver or robot 11') to stop the vehicle before the zebra crossing.
- The human road user directs its gaze toward (see dashed line) the driver to look for a response of the driver.
- The driver responds by making a gesture (please proceed) that indicates that the human road user may cross the zebra crossing - for example moving his hand from left to right.
- The human road user verifies that he received the gesture of the driver - for example by a thumbs up gesture - and is ready to cross the zebra crossing.

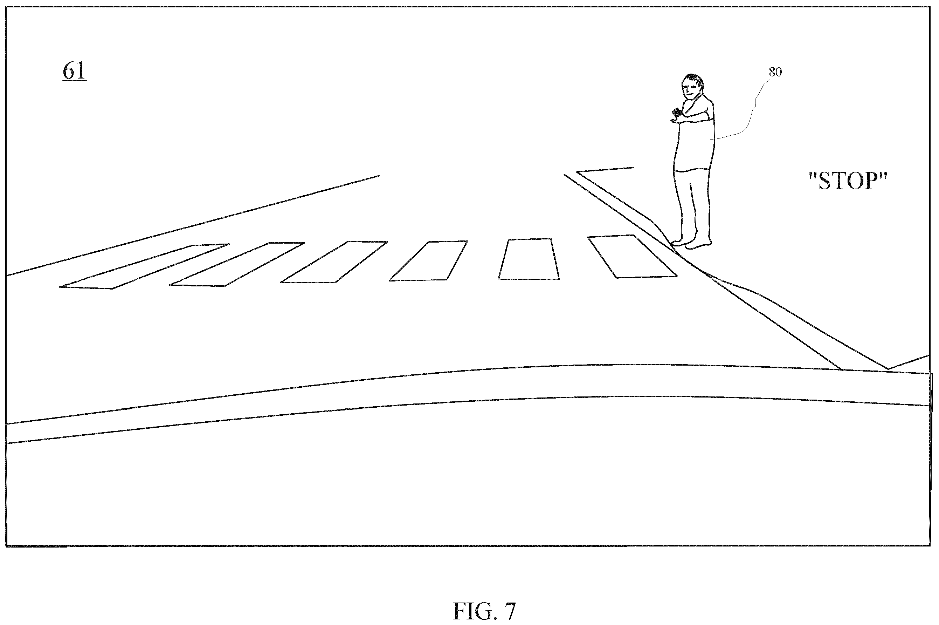

Figure 7 illustrates image 61 of the human road user that requests the vehicle to stop.

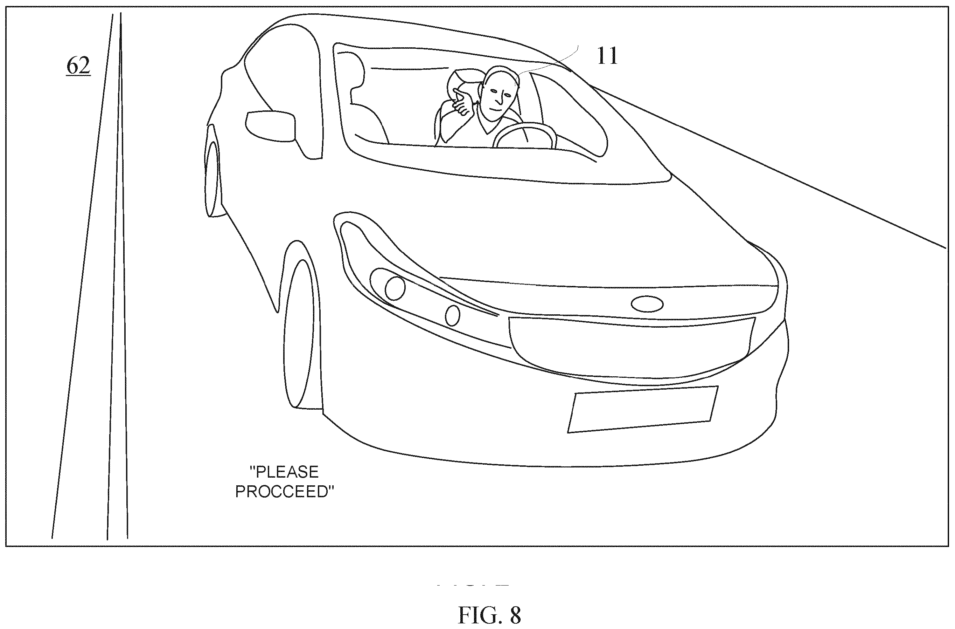

Figure 8 illustrates image 62 of the driver (human driver) 11 making a gesture (please proceed) that indicates that the human road user may cross the zebra crossing.

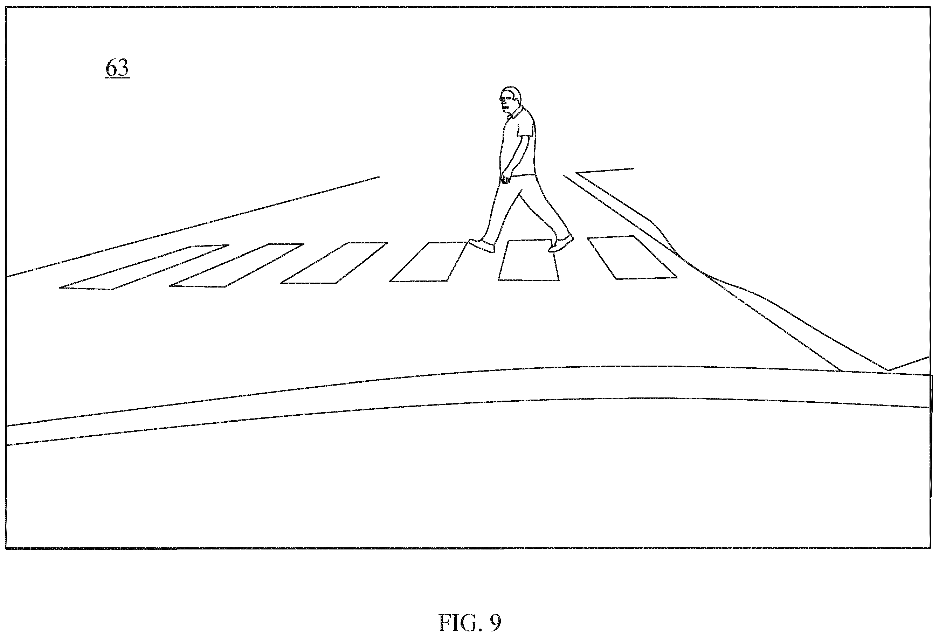

Figure 9 illustrates image 63 of the human road user that looks at the driver while crossing the zebra crossing.

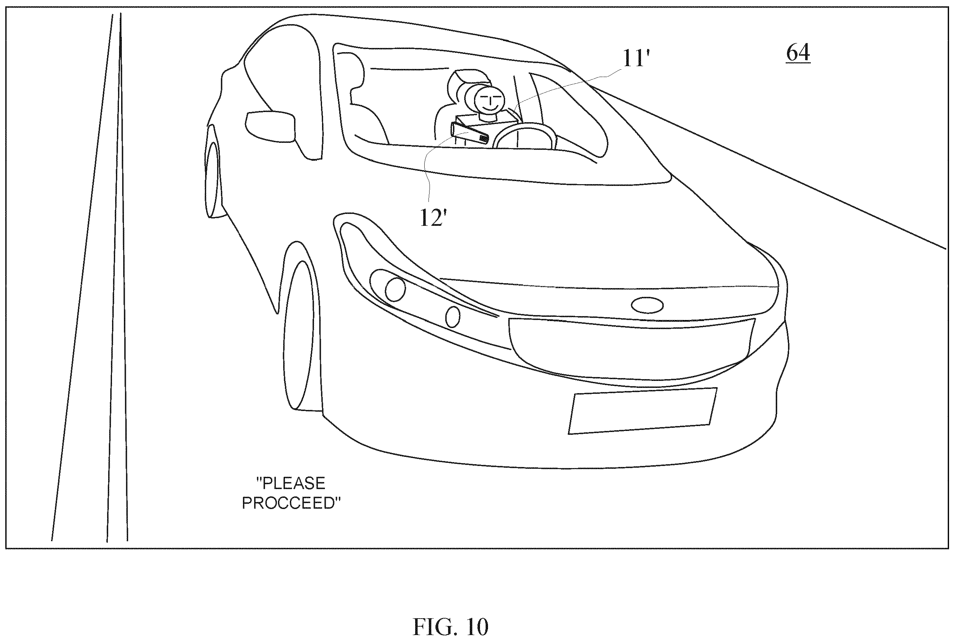

Figure 10 illustrates image 64 of an MMI that is a robot 11' that is a humanoid robot that makes a gesture by moving its robotic arm 12' and possibly its robotic fingers to that indicates that the human road user may cross the zebra crossing.

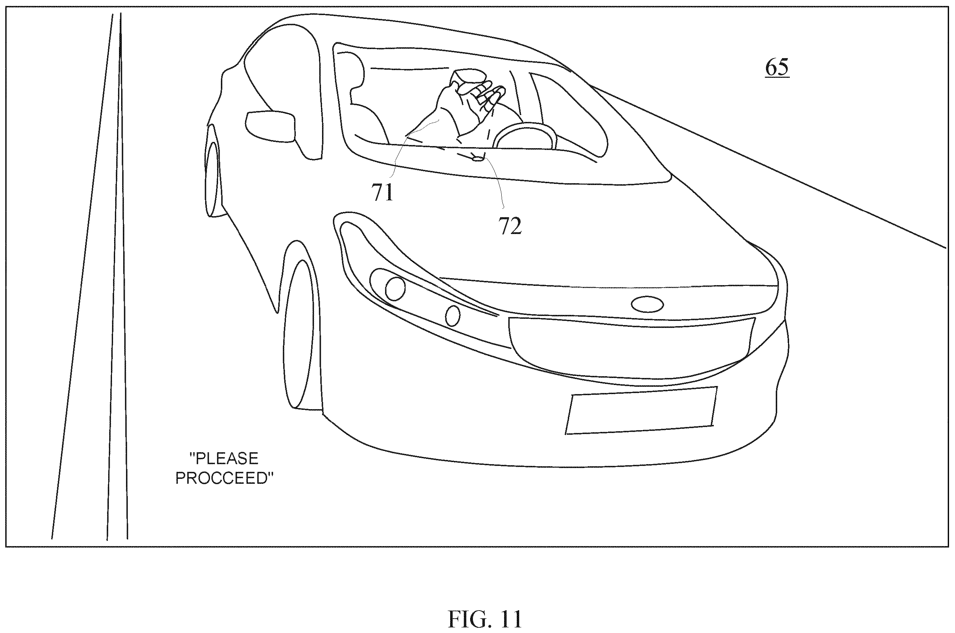

Figure 11 illustrates image 64 of an MMI that is a display 71 that projected on the window by projector 71 thereby displaying a gesture that indicates that the human road user may cross the zebra crossing.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples.

In the foregoing specification, the invention has been described with reference to specific examples of embodiments of the invention. It will, however, be evident that various modifications and changes may be made.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Furthermore, the terms "assert" or "set" and "negate" (or "deassert" or "clear") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures may be implemented which achieve the same functionality.

Any arrangement of components to achieve the same functionality is effectively "associated" such that the desired functionality is achieved. Hence, any two components herein combined to achieve a particular functionality may be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within the same device. Alternatively, the examples may be implemented as any number of separate integrated circuits or separate devices interconnected with each other in a suitable manner.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

While certain features of the invention have been illustrated and described herein, many modifications, substitutions, changes, and equivalents will now occur to those of ordinary skill in the art.

It is appreciated that various features of the embodiments which are, for clarity, described in the contexts of separate embodiments may also be provided in combination in a single embodiment. Conversely, various features of the embodiments which are, for brevity, described in the context of a single embodiment may also be provided separately or in any suitable sub-combination.

## Claims

1. A method (100) for communication between a vehicle and a human road user, the method comprises:
determining (110) to interact with a human road user, wherein the determining is executed by a vehicle processing module, and is based on sensed information that is sensed by at least one vehicle sensor, to interact with a human road user; and
interacting (120) with the human road user by generating, by a man machine interface, one or more representations of one or more human gestures;
the determining (110) includes detecting a situation in which human interaction is expected or mandated, wherein detection of the situation is based on training a machine learning process to detect the situation,
**characterized in that**
the man machine interface is a humanoid robot that models at least an upper part of a human body positioned at a driver's seat; and
**in that** the interacting with the human user comprises performing a time related gesture that indicates a time period for completing an action by the human road use.

2. The method (100) according to claim 1 wherein the interacting comprises generating the one or more representations by moving mechanical elements of the humanoid robot.

3. The method (100) according to claim 1 wherein the man machine interface further comprises at least one display.

4. The method (100) according to claim 3 wherein the at least one display is embedded within one of more windows of the vehicle.

5. The method (100) according to claim 3 wherein the at least one display is formed on an exterior of the vehicle.

6. The method (100) according to claim 1 wherein the determining comprises finding a trigger for interaction.

7. The method (100) according to claim 6 wherein the trigger is an attempt of the human road user to interact with the vehicle.

8. The method (100) according to claim 1 wherein the man machine interface further comprises a display that turns transparent to non-transparent or partially transparent when communicating with the human road user.

9. The method (100) according to claim 1, wherein the machine learning process was trained by a dataset of videos that captured situations that are expected to involve human interaction; wherein the captured situations that are expected to involve human interaction are detected by a manner in which the vehicle was driven.

10. The method (100) according to claim 9 wherein the captured situations that are expected to involve human interaction are detected by monitoring for abrupt changes in a driving of the vehicle and having one or more human road user involved.

## Patentansprüche

1. Verfahren (100) zur Kommunikation zwischen einem Fahrzeug und einem menschlichen Verkehrsteilnehmer, wobei das Verfahren Folgendes umfasst:
Bestimmen (110), mit einem menschlichen Verkehrsteilnehmer zu interagieren, wobei das Bestimmen durch ein Fahrzeugverarbeitungsmodul ausgeführt wird und auf erfassten Informationen basiert, die durch mindestens einen Fahrzeugsensor erfasst werden, um mit einem menschlichen Verkehrsteilnehmer zu interagieren, und Interagieren (120) mit dem menschlichen Verkehrsteilnehmer durch Erzeugen einer oder mehrerer Darstellungen einer oder mehrerer menschlicher Gesten durch eine Mensch-Maschine-Schnittstelle,
wobei das Bestimmen (110) das Erkennen einer Situation einschließt, in der menschliche Interaktion erwartet wird oder vorgeschrieben ist, wobei das Erkennen der Situation auf dem Trainieren eines maschinellen Lernprozesses basiert, um die Situation zu erkennen,
**dadurch gekennzeichnet, dass** die Mensch-Maschine-Schnittstelle ein humanoider Roboter ist, der mindestens einen oberen Teil eines menschlichen Körpers modelliert, der auf einem Fahrersitz positioniert ist, und
dadurch, dass das Interagieren mit dem menschlichen Teilnehmer das Durchführen einer zeitbezogenen Geste umfasst, die einen Zeitraum zum Abschließen einer Handlung durch den menschlichen Verkehrsteilnehmer angibt.

2. Verfahren (100) nach Anspruch 1, wobei das Interagieren das Erzeugen der einen oder mehreren Darstellungen durch Bewegen mechanischer Elemente des humanoiden Roboters umfasst.

3. Verfahren (100) nach Anspruch 1, wobei die Mensch-Maschine-Schnittstelle ferner mindestens eine Anzeige umfasst.

4. Verfahren (100) nach Anspruch 3, wobei die mindestens eine Anzeige in eines oder mehrere Fenster des Fahrzeugs eingebettet ist.

5. Verfahren (100) nach Anspruch 3, wobei die mindestens eine Anzeige auf einer Außenseite des Fahrzeugs gebildet ist.

6. Verfahren (100) nach Anspruch 1, wobei das Bestimmen das Finden eines Auslösers für die Interaktion umfasst.

7. Verfahren (100) nach Anspruch 6, wobei der Auslöser ein Versuch des menschlichen Verkehrsteilnehmers ist, mit dem Fahrzeug zu interagieren.

8. Verfahren (100) nach Anspruch 1, wobei die Mensch-Maschine-Schnittstelle ferner eine Anzeige umfasst, die beim Kommunizieren mit dem menschlichen Verkehrsteilnehmer durchsichtig bis undurchsichtig oder teilweise durchsichtig wird.

9. Verfahren (100) nach Anspruch 1, wobei der maschinelle Lernprozess durch einen Datensatz von Videos trainiert wurde, die Situationen aufgezeichnet haben, von denen erwartet wird, dass sie eine menschliche Interaktion beinhalten, wobei die aufgezeichneten Situationen, von denen erwartet wird, dass sie eine menschliche Interaktion beinhalten, durch eine Art und Weise, wie das Fahrzeug gefahren wurde, erkannt werden.

10. Verfahren (100) nach Anspruch 9, wobei die aufgezeichneten Situationen, von denen erwartet wird, dass sie eine menschliche Interaktion beinhalten, durch Überwachen auf abrupte Änderungen in einer Fahrweise des Fahrzeugs erkannt werden und die Einbeziehung eines oder mehrerer menschlicher Verkehrsteilnehmer aufweisen.

## Revendications

1. Procédé (100) de communication entre un véhicule et un usager de la route humain, le procédé comprenant :
la détermination (110) d'interagir avec un usager de la route humain, dans lequel la détermination est exécutée par un module de traitement de véhicule, et est basée sur des informations détectées qui sont détectées par au moins un capteur de véhicule, pour interagir avec un usager de la route humain ; et
le fait d'interagir (120) avec l'usager de la route humain par la génération, par une interface homme-machine, d'une ou de plusieurs représentations d'un ou de plusieurs gestes humains ;
la détermination (110) inclut la détection d'une situation dans laquelle une interaction humaine est attendue ou prescrite, dans lequel la détection de la situation est basée sur l'entraînement d'un processus d'apprentissage automatique à détecter la situation,
**caractérisé en ce que** l'interface homme-machine est un robot humanoïde qui modélise au moins une partie supérieure d'un corps humain positionné au niveau d'un siège conducteur ; et
**en ce que** le fait d'interagir avec l'utilisateur humain comprend la réalisation d'un geste temporel qui indique une durée pour l'achèvement d'une action par l'usager de la route humain.

2. Procédé (100) selon la revendication 1 dans lequel le fait d'interagir comprend la génération des une ou plusieurs représentations par le mouvement d'éléments mécaniques du robot humanoïde.

3. Procédé (100) selon la revendication 1 dans lequel l'interface homme-machine comprend en outre au moins un afficheur.

4. Procédé (100) selon la revendication 3 dans lequel l'au moins un afficheur est intégré au sein d'une ou de plusieurs fenêtres du véhicule.

5. Procédé (100) selon la revendication 3 dans lequel l'au moins un afficheur est formé sur un extérieur du véhicule.

6. Procédé (100) selon la revendication 1 dans lequel la détermination comprend la découverte d'un déclencheur pour une interaction.

7. Procédé (100) selon la revendication 6 dans lequel le déclencheur est une tentative de l'usager de la route humain d'interagir avec le véhicule.

8. Procédé (100) selon la revendication 1 dans lequel l'interface homme-machine comprend en outre un afficheur qui passe de transparent à non transparent ou partiellement transparent lors d'une communication avec l'usager de la route humain.

9. Procédé (100) selon la revendication 1, dans lequel le processus d'apprentissage automatique a été entraîné par un ensemble de données de vidéos qui ont capturé des situations qui sont censées impliquer une interaction humaine ; dans lequel les situations capturées qui sont censées impliquer une interaction humaine sont détectées par une manière selon laquelle le véhicule a été conduit.

10. Procédé (100) selon la revendication 9 dans lequel les situations capturées qui sont censées impliquer une interaction humaine sont détectées par la surveillance de changements brusques dans une conduite du véhicule et ayant un ou plusieurs usagers de la route humains impliqués.
